# EUROPEAN PATENT SPECIFICATION

(11) **EP 1 145 577 B1**
(45) Date of publication and mention of the grant of the patent: **02.01.2004**
(21) Application number: 00901644.5
(22) Date of filing: 20.01.2000
(51) Int. Cl.: H04Q 7/22

(54) **METHOD AND SYSTEM FOR THE ROUTING OF A MESSAGE**
VERFAHREN UND SYSTEM FÜR NACHRICHTENWEGLEITUNG
PROCEDE ET SYSTEME D'ACHEMINEMENT D'UN MESSAGE

(30) Priority: 25.01.1999 FI 990135
(43) Date of publication of application: 17.10.2001
(73) Proprietor: Sonera Oyj, 00510 Helsinki (FI)
(72) Inventor: LINKOLA, Janne, FIN-00170 Helsinki (FI)
(74) Representative: Simmelvuo, Markku
(86) International application number: PCT/FI2000/000046
(87) International publication number: WO 2000/047004

(56) References cited:
- WO-A1-97/20442
- WO-A1-97/36434
- WO-A1-99/57926
- WO-A2-00/10294
- WO-A2-98/28920
- WO-A2-98/30051
- WO-A2-98/32300
- WO-A2-98/56195

## Description

The present invention relates to telecommunication systems. In particular, the invention concerns a method and a system for the routing of a short message.

### BACKGROUND OF THE INVENTION

Short message service refers to a telecommunication service for the transmission and reception of short text messages. For instance, in a GSM mobile communication network (GSM, Global System for Mobile communications), the short message service provides means for sending messages having a maximum length of 160 characters to a GSM terminal. To implement a short message service, a short message service center is needed which functions as a center where short messages are stored and transmitted further. There are two point-to-point functions defined for the short message service: Mobile Originated, which means a message originated by a telecommunication terminal, and Mobile Terminated, which means a message addressed to a telecommunication terminal.

In telecommunication networks, especially in mobile communication networks, many services operated by means of short messages have been implemented. For example, in a bank service application, the user of a telecommunication terminal can pay his bills via a short message service. To do this, the user sends a short message in a predetermined format via a short message service center to a predetermined number. The predetermined format of the short message contains the data required for the execution of the bank service function. The predetermined number has been defined as a certain address in a fixed data network, and the short message service center performs an address conversion from number to address. A bank application in the data network processes the command delivered in the short message and sends a response via the short message service center to the user of the telecommunication terminal.

In the situation described above, the short message service center is an essential component for the application; as the short message service center has to perform an address conversion, the application is dependent on a given short message service center and often on the network operator as well. This is a source of problems for subscribers using different networks because the service application is only available in certain networks. If a subscriber in a first network wants to use a service application in a second network, then the subscriber has to define a short message service center of the second network in his telecommunication terminal for the time he is using the service application. The subscriber also has to perform this operation between two short message service centers in the network of the same operator.

Previously known is a method in which a short message of Mobile Terminated format can be forwarded as a short message in Mobile Originated format by means of a telecommunication terminal. However, the short message must cross a radio interface, and this means wasting limited radio network capacity. This method cannot be applied to a large number of short messages to be transmitted simultaneously. In a known solution, the operator of the first network may perform a conversion service in a short message service center in the first network. In this case, however, a special agreement between the operators of the first and second networks is required.

Prior art also includes WO-A-97 20442 and WO-A-98 56195. WO-A-97 20442 discloses a method and apparatus for facilitating inter-network message communications within the framework of a cellular telecommunications network. WO-A-98 56195 discloses a method and an equipment implementing the method in a telecommunication system in which short messages may be sent amid actual signalling, whereby one or more short message service centres providing short message services are linked to the mobile communication system. However, these documents fail to eliminate the drawbacks referred to above.

The object of the present invention is to eliminate the drawbacks referred to above or at least to significantly alleviate them. A further object of the invention is to disclose a new type of method and system that will make it possible to use short message based data network services independently of the short message service center defined in the mobile station.

### BRIEF DESCRIPTION OF THE INVENTION

The invention concerns a method for routing a short message into a data network in a telecommunication system comprising a mobile communication network and, connected to the mobile communication network, a telecommunication terminal, a first short message service center as well as a data network. The short message service center defined in the telecommunication terminal is the first short message service center. In the method, a short message addressed to a predetermined destination number is routed from the terminal to the first short message service center. The number range corresponds e.g. to numbering scheme E.164. The short message is routed from the first short message service center in Mobile Terminated format to the predetermined destination number.

According to the method of the invention, the short message is routed from the first short message service center to a special converter component on the basis of the destination number referring to it and comprised in the number range of the mobile communication network. The converter component is a new type of network component implementing certain functions in the mobile switching center, and the converter component (MSCM) is seen as a mobile switching center comprised in the number range of the mobile communication network. The predetermined short message destination number referring to the converter component is converted in the converter component into a destination number referring to the data network. The short message is routed from the converter component to the data network. In an embodiment, the data network is connected to the converter component and the short message is transmitted directly from the converter component into the data network. In an embodiment, the converter component is located at a network address corresponding to a mobile switching center.

In an embodiment of the invention, the destination number is preferably comprised in the numbering scheme of a global mobile communication network, which means that it will be possible to be connected to the data network via existing telecommunication terminals regardless of the network or operator. In other words, a short message can be routed to the data network by using a number referring to the converter component.

The invention further concerns a method for routing a short message in a telecommunication system like the one described above but additionally comprising a second short message service center, to which the data network is connected. According to the invention, the short message is routed from the first short message service center to the converter component on the basis of a destination number referring to it and comprised in the number range of the mobile communication network. The short message destination number referring to the converter component is converted into a destination number referring to the second short message service center. In addition, a Mobile Terminated format short message is converted in the converter component into a Mobile Originated format short message and routed to the second short message service center. In an embodiment, the converter component is located at a network address corresponding to a mobile switching center.

In an embodiment, this latter destination number again refers to a destination number in the data network connected to the second short message service center. The destination number conversions are so chained that the data network and the service possibly implemented in it will be reached by using a number referring to the converter component.

In an embodiment of the method, an acknowledgement message is routed from the second short message service center to the first short message service center via the converter component, the first short message service center thus receiving an acknowledgement message in response to the Mobile Terminated format short message.

The invention also concerns a system for routing a short message into a data network in a telecommunication system comprising a mobile communication network and, connected to it, a telecommunication terminal, a first short message service center and a data network. In the telecommunication terminal, the first short message service center has been defined as the active short message service center. In the system, a short message routed to a predetermined destination number is addressed from the telecommunication terminal to the first short message service center. In addition, the short message is routed from the first short message service center in Mobile Terminated format to the predetermined destination number.

The system of the invention comprises a converter component connected to the mobile communication network, the destination number comprised in the number range of the mobile communication network referring to said converter component. The converter component is seen as a mobile switching center comprised in the number range of the mobile communication network. Moreover, the system comprises means for routing the short message from the first short message service center to the converter component on the basis of the destination number referring to it and means for routing the short message from the converter component to the data network. The converter component comprises means for converting a predetermined short message destination number referring to the converter component into a destination number referring to the data network. The converter component is preferably located at a network address corresponding to a mobile switching center. In an embodiment, the data network is connected to the converter component.

In addition, the invention concerns a system for the routing of a short message in a telecommunication system as described above but additionally comprising a second short message service center, to which the data network is connected. According to the invention, the system comprises a converter component connected to the mobile communication network, with a destination number comprised in the number range of the mobile communication network referring to said converter component. The converter component comprises means for converting a Mobile Terminated format short message into a Mobile Originated format short message and means for sending the short message to the second short message service center. The converter component comprises means for converting a predetermined short message destination number referring to the converter component into a destination number referring to the second short message service center, which again refers to a destination number in the data network. The converter component is preferably located at a network address corresponding to the mobile switching center.

In an embodiment, the system comprises means for routing an acknowledgement message from the second short message service center to the first short message service center via the converter component, in which case the first short message service center receives an acknowledgement message in response to a Mobile Terminated format short message.

The mobile communication network used in certain embodiments of the methods and systems described above is based on a digital mobile communication system, such as the GSM system.

As compared with prior art, the invention provides the advantage that it makes it possible to utilize Mobile Terminated format short messages which are transmitted from network to network. Thus, short message applications provided in another network can be utilized without operators or users having to make any changes in existing equipment. No separate agreement is needed between operators to allow the use of services provided by another operator, and the user need not set the number of the short message service center of the other operator in his mobile station for the time he is using a service. The invention allows world-wide utilization of a service, thanks to the global numbering used in the mobile communication network.

The invention can be applied to a form of service in which e.g. a television advertisement or a corresponding interactive medium presents a question and a telephone number to which a text message can be sent. In this way, it is possible to implement e.g. a telephonic poll using text messages, avoiding the congestion that would result in the case of a switched connection. In addition, this form of service is advantageous to the user. The connection functions regardless of the short message service center assigned for the subscriber. The invention allows a large number of calls to be simultaneously connected to a data network via a text message service.

### LIST OF ILLUSTRATIONS

In the following, the invention will be described by the aid of a few examples of its embodiments with reference to the attached drawing, in which
Fig. 1a and 1b illustrate prior-art signalling schemes;
Fig. 2 presents a diagram representing the system of the invention; and
Fig. 3 presents a signalling scheme according to the invention.

### DETAILED DESCRIPTION OF THE INVENTION

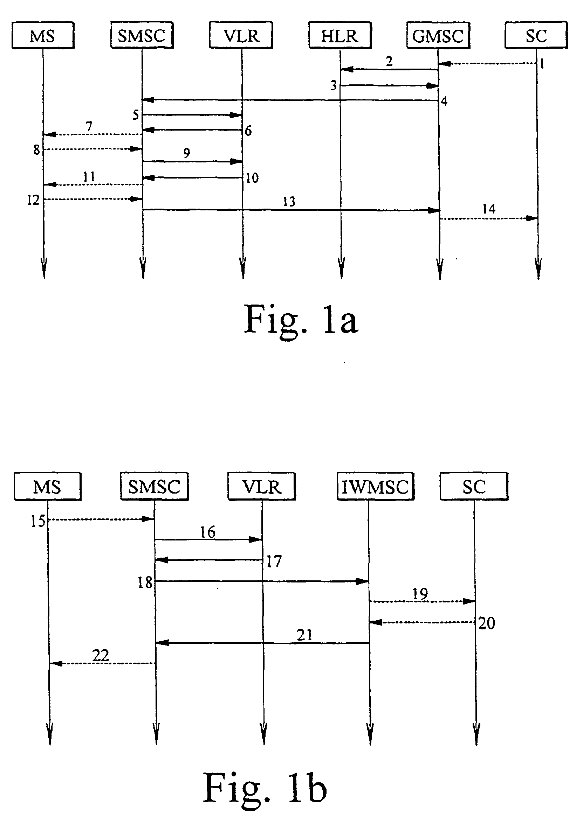

Fig. 1a presents the signalling in the case of a Mobile Terminated short message as specified in the GSM system. In the following, the signalling will be elucidated by referring to the numbered arrows in the figure.

A short message consistent with GSM specification 03.40 is sent from a short message service center SC to a mobile switching center GMSC serving as a gateway, arrow 1. The mobile switching center GMSC queries the subscriber's home location register HLR for routing data for the subscriber by a MAP operation (MAP, Mobile Application Part) MAP_SEND_ROUTING_INFO_FOR_SM, arrow 2. The home location register HLR answers the query, arrow 3. The mobile switching center GMSC routes the short message to mobile switching center SMSC by a MAP_MT_FORWARD_SHORT_MESSAGE operation, arrow 4. Mobile switching center SMSC queries the visitor location register VLR for the B-party's location by a MAP_SEND_INFO_FOR_MT_SMS operation, arrow 5. The visitor location register responds with a MAP_PAGE/MAP_SEARCH_FOR_MOBILE_SUBSCRIBER operation, arrow 6. Mobile switching center SMSC searches the network to reach the mobile station MS by a BSSAP operation (Base Station System Application Part) as described in GSM specification 04.08, arrow 7. The mobile station MS responds to the search, arrow 8. Mobile switching center SMSC sends to the visitor location register VLR an acknowledgement of having reached the mobile station MS, arrow 9. The visitor location register VLR sends an acknowledgement to the mobile switching center SMSC, arrow 10. The mobile switching center sends the short message to the mobile station MS in the manner described in GSM specification 04.11, arrow 11. The mobile station MS sends an acknowledgement of receipt of the short message to the mobile switching center SMSC, arrow 12. Mobile switching center SMSC sends an acknowledgement to the mobile switching center GMSC serving as a gateway, arrow 13. Mobile switching center GMSC sends to the short message service center SC an acknowledgement of transmission of the short message, arrow 14.

Fig. 1b presents the signalling for a Mobile Originated short message as specified in the GSM system. In the following, the signalling will be elucidated by referring to the numbered arrows in the figure.

A mobile station MS sends a short message to a mobile switching center SMSC in the manner described in GSM specification 04.11, arrow 15. The mobile switching center SMSC checks the subscriber information in the visitor location register VLR by a MAP_SEND_INFO_FOR_MO_SMS operation, arrow 16. The visitor location register VLR sends an acknowledgement of the message to the mobile switching center SMSC, arrow 17. The mobile switching center SMSC routes the short message to mobile switching center IWMSC by a MAP_MO_FORMARD_SHORT_MESSAGE operation, arrow 18. The short message is routed to the short message service center SC in the manner described in GSM specification 03.40, arrow 19. The short message service center SC sends an acknowledgement of the short message to mobile switching center IWMSC, arrow 20. The mobile switching center IWMSC sends an acknowledgement of the short message to mobile switching center SMSC by a MAP_MO_FORMARD_SHORT_MESSAGE_ACK operation, arrow 21. Mobile switching center SMSC sends an acknowledgement of the short message to the mobile station MS by a BSSAP operation as described in GSM standard 04.11, arrow 22.

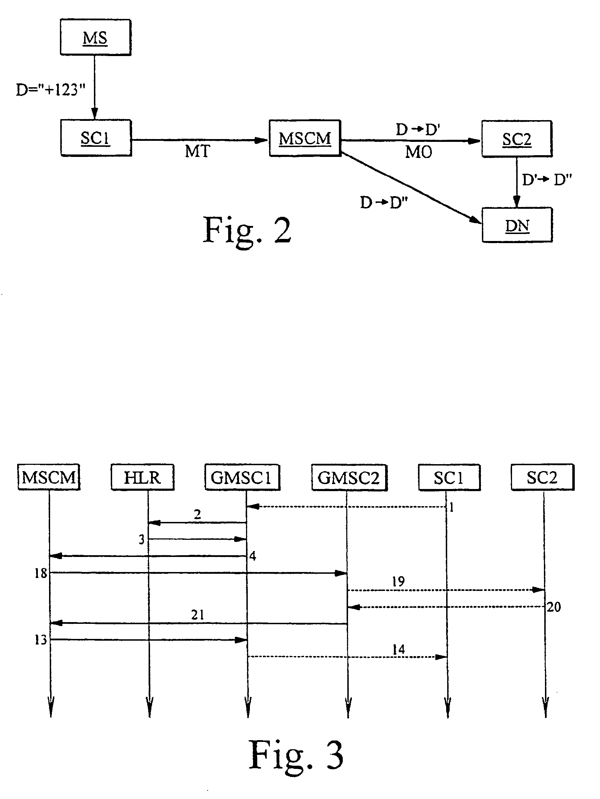

Fig. 2 is a diagrammatic illustration of a system according to the present invention. The figure shows only the components that are essential as regards the invention, not all the components comprised in the telecommunication network, which are obvious to a person skilled in the art. A mobile station MS is connected to a digital mobile communication network, e.g. the GSM network. In the mobile station MS, short message service center SC1 has been defined as the station through which the short messages sent by the mobile station are to be transmitted. Moreover, the system comprises a second short message service center SC2 with a data network DN connected to it. The short message service centers SC1 and SC2 may belong to mobile communication networks managed by different operators or to a network managed by a single operator.

Connected between the mobile switching centers is a converter component MSCM. In the case of this example, the mobile station MS and the first short message service center SC1 belong to the network of a different operator than the converter component MSCM, the second short message service center SC2 and the data network DN. As regards the applicability of the invention, the network components may be located in any network. Moreover, the converter component MSCM can be integrated as a part of some other suitable network component.

From the mobile station MS, a short message is sent into the data network DN by using numbering referring to the converter component MSCM. In the example, the short message is sent to the telephone number D; the numeric sequence "+123" at the beginning of the telephone number D refers to the converter component MSCM. The converter component MSCM comprises means for routing the short message into the data network DN, and the telephone number D is converted into an address D' referring to the second short message service center SC2. The short message is routed further to the data network DN, the short message service center SC2 converting the telephone number D' into an address D " in the data network DN.

Using means provided in the converter component MSCM, the telephone number D can also be converted directly into an address D'' in the data network DN. In this case, the data network DN is connected to the converter component MSCM and the short message is transferred directly from the converter component MSCM into the data network DN without any actions performed by the second short message service center SC2. The interface between the converter component MSCM and the data network DN is similar to that between the short message service center SC2 and the data network DN. There may be either one or two transmission links to the data network DN. The reasons for alternative routing include e.g. the data network destination address D'', the time, contents of the message and malfunction in the second short message service center SC2, requiring an alternate route.

The converter component MSCM comprises means for converting a Mobile Terminated format short message into a Mobile Originated format short message. The conversion is accomplished by converting fields of Mobile Terminated format in the messages into fields of Mobile Originated format. The converter component MSCM also comprises means for converting an acknowledgement message received from the second short message service center GMSC2 in response to a Mobile Originated format short message so that the telecommunication terminal MS sees it as an answer to the original message. The fields to be converted are presented e.g. in the MAP protocol items MAP_MT_FORWARD_SHORT_MESSAGE and MAP_MO_FORWARD_SHORT_MESSAGE, which are described in the GSM 09.02 v6.1.0 standard. As regards the invention, the following information elements comprised in the original Mobile Terminated message are essential:
SM RP OA: contains the first short message service center SC1.
SM RP DA: contains the GSM network subscriber identity IMSI corresponding to the destination number D.
SM RP UI: contains a data element of the next protocol level TPDU, comprising the information element TP-OA which contains the telephone number (MSISDN1) of the sender (MS) of the message.

In the converted Mobile Originated message, the following information elements are set:
SM RP OA: the TP-OA found in the TPDU which was in the SM RP UI field in the Mobile Terminated message
SM RP DA: address of the second short message service center SC2.
SMRP UI: the second address D' corresponding to the IMSI, found in the converter component MSCM, is set in the TPDU element field TP-DA found in SM RP UI.

The converter component MSCM is so implemented that it performs partly the same functions as the mobile switching centre MSC defined in conjunction with mobile communication systems. The number of functions implemented in the converter component MSCM is considerably smaller than in the mobile switching center, so it is simpler, easier and cheaper in respect of manufacture and maintenance.

In location updating, the converter component MSCM implements the functions of the visitor location register VLR. For updating, the subscriber register for the destination address or destination subscription of the original short message is used as a home location register HLR. The converter component performs the MAP_UPDATE_LOCATION operation, responds to the MAP_INSERT_SUBSCRIBER_DATA with an appropriate acknowledgement message and receives the message acknowledging the MAP_UPDATE_LOCATION operation.

Fig. 3 presents a signalling scheme according to the invention. The arrow numbers used in Fig. 3 correspond to the numbers in Fig. 1a and 1b in such manner that the relevant part of the signalling according to the invention is comprised in prior-art signalling for Mobile Terminated and Mobile Originated short messages. In the following, the signalling will be elucidated by referring to the numbered arrows presented in the figure.

In the example, subscriber A sends a short message to the number B1 via his short message service center SC1. The short message is transmitted to short message service center SC1 as a normal Mobile Originated short message. Short message service center SC1 routes the short message to mobile switching center GMSC1, arrow 1. The mobile switching center GMSC1 detects e.g. by a part at the beginning of the number that the short message is destined for another telephone network. The mobile switching center GMSC1 sends a routing query to the home location register HLR, arrow 2. The home location register HLR responds to the query, arrow 3. The home location register HLR contains data indicating that the subscriber is located in the area of the converter component MSCM, in other words, the home location register HLR sees the converter component MSCM as a mobile switching center. The mobile switching center GMSC routes the short message to the converter component MSCM by a MAP_MT_FORWARD_SHORT_MESSAGE operation, arrow 4.

The converter component MSCM is the inventive signalling component which converts the Mobile Terminated format short message into a Mobile Originated format short message. The format of the short message is so changed that the short message will seem to be on its way from subscriber A to short message service center SC2, to the number D'. The converter component MSCM routes the converted short message to mobile switching center GMSC2 by a MAP_MO_FORWARD_SHORT_MESSAGE operation, arrow 18. The short message is transmitted to short message service center SC2, arrow 19. Short message service center SC2 sends an acknowledgement of the short message to mobile switching center GMSC2, arrow 20. Mobile switching center GMSC2 sends an acknowledgement of the Mobile Originated format short message to mobile switching centre MSCM by a MAP_MO_FORMARD_SHORT_MESSAGE operation, arrow 21. The converter component MSCM sends an acknowledgement of the Mobile Terminated format short message to mobile switching center GMSC1, arrow 13. Mobile switching center GMSC1 sends to short message service center SC1 an acknowledgement of the short message transmitted, arrow 14.

At the same time, short message service center SC2 receives the message in the normal manner and converts the number D' into the data network address D" at which the actual service application is located. The service application at the address D " sees that the short message has been transmitted from subscriber A via short message service center SC2. The service application processes the short message and sends a response, setting the sender number as B2. Short message service center SC2 receives the short message and sends a response message to subscriber A by a known procedure. The response message sent by the service application need not be routed via the converter component MSCM. Subscriber A sees that the response message has arrived from the number B2 via short message service center SC2 and one transaction has been finished.

In the invention, the transmission of the Mobile Terminated format short message is interrupted when the short message has reached the center which is the converter component MSCM. After this, the short message is transmitted to the second short message service center SC2 just as if the short message had been received via the radio interface. In the invention, the mode of operation is then changed into the mode of a Mobile Originated short message, whereupon the original Mobile Terminated message is acknowledged.

Correspondingly, in a situation where the data network DN is connected to the converter component MSCM, no conversion from Mobile Terminated type message into Mobile Originated type short message is performed but the short message is routed directly from the converter component MSCM into the data network DN. In this case, referring to Fig. 3, messages 1,2,3,4,13 and 14 are used. The interface between the converter component MSCM and the data network DN is so implemented that it resembles the interface between short message service center SC2 and the data network DN.

The invention is not restricted to the examples of its embodiments described above, but many variations are possible within the scope of the inventive idea defined in the claims.

## Claims

1. Method for routing a short message into a data network in a telecommunication system comprising:
a mobile communication network;
a telecommunication terminal (MS) connected to the mobile communication network;
a first short message service center (SC1) connected to the mobile communication network; and
a data network (DN) connected to the mobile communication network;
in which the short message service center defined in the telecommunication terminal (MS) is the first short message service center (SC1) and in which method:
a short message addressed to a predetermined destination number is routed from the telecommunication terminal (MS) to the first short message service center; and
the short message is routed in Mobile Terminated format from the first short message service center to the predetermined destination number,
**characterized in that** the method comprises the steps of:
routing the short message from the first short message service center (SC1) to a converter component (MSCM) on the basis of the destination number (D) referring to it and comprised in the number range of the mobile communication network, said converter component (MSCM) seen as a mobile switching center comprised in the number range of the mobile communication network;
converting in the converter component (MSCM) the predetermined destination number (D) of the short message referring to the converter component (MSCM) into a destination number (D'') referring to the data network (DN); and
routing the short message from the converter component into the data network (DN).

2. Method as defined in claim 1, **characterized in that** the converter component (MSCM) is disposed at a network address (D) corresponding to a mobile switching center.

3. Method as defined in claim 1 or 2, **characterized in that** the data network (DN) is connected to the converter component (MSCM).

4. Method for routing a short message in a telecommunication system comprising:
a mobile communication network;
a telecommunication terminal (MS) connected to the mobile communication network;
a first short message service center (SC1) connected to the mobile communication network;
a second short message service center (SC2) connected to the mobile communication network; and
a data network (DN) connected to the second short message service center;
in which the short message service center defined in the telecommunication terminal (MS) is the first short message service center (SC1) and in which method:
the short message, which is addressed to a predetermined destination number, is routed from the telecommunication terminal (MS) to the first short message service center; and
the short message is routed from the first short message service center in Mobile Terminated format to the predetermined destination number,
**characterized in that** the method comprises the steps of:
routing the short message from the first short message service center (SC1) to a converter component (MSCM) on the basis of a destination number (D) referring to it and comprised in the number range of the mobile communication network, said converter component (MSCM) seen as a mobile switching center comprised in the number range of the mobile communication network;
converting in the converter component (MSCM) the predetermined destination number (D) of the short message referring to the converter component (MSCM) into a destination number (D') referring to the second short message service center;
converting the Mobile Terminated format short message in the converter component (MSCM) into a Mobile Originated format short message; and
routing the short message from the converter component to the second short message service center (SC2) .

5. Method as defined in claim 4, **characterized in that** the converter component (MSCM) is disposed at the network address corresponding to a mobile switching center.

6. Method as defined in claim 4 or 5, **characterized in that** the destination number (D') referring to the second short message service center is arranged to refer to a destination number (D'') in the data network (DN) connected to the second short message service center.

7. Method as defined in any one of claims 4 - 6, **characterized in that** an acknowledgement message is routed from the second short message service center (SC2) to the first short message service center (SC1) via the converter component (MSCM), so that the first short message service center (SC1) receives an acknowledgement message in response to the Mobile Terminated format short message.

8. System for routing a short message into a data network in a telecommunication system comprising:
a mobile communication network for routing a short message addressed to a predetermined destination number, from a telecommunication terminal to a first short message service center, and from the first short message service center in Mobile Terminated format to the predetermined destination number;
a telecommunication terminal (MS) connected to the mobile communication network;
a first short message service center (SC1) connected to the mobile communication network; and
a data network (DN) connected to the mobile communication network;
in which the short message service center defined in the telecommunication terminal (MS) is the first short message service center (SC1);
**characterized in that** the system comprises:
a converter component (MSCM) connected to the mobile communication network and referred to by the destination number (D) comprised in the number range of the mobile communication network, said converter component (MSCM) seen as a mobile switching center comprised in the number range of the mobile communication network;
means for routing the short message from the first short message service center (SC1) to the converter component on the basis of the predetermined destination number (D) referring to it; and
means for routing the short message from the converter component into the data network (DN);
and **in that** the converter component (MSCM) comprises means for converting the predetermined short message destination number (D) referring to the converter component into a destination number (D'') referring to the data network (DN).

9. System as defined in claim 8, **characterized in that** the converter component (MSCM) is located at the network address corresponding to a mobile switching center.

10. System as defined in claim 8 or 9, **characterized in that** the data network (DN) is connected to the converter component (MSCM).

11. System for routing a short message in a telecommunication system comprising:
a mobile communication network for routing a short message addressed to a predetermined destination number, from a telecommunication terminal to a first short message service center, and from the first short message service center in Mobile Terminated format to the predetermined destination number;
a telecommunication terminal (MS) connected to the mobile communication network;
a first short message service center (SC1) connected to the mobile communication network;
a second short message service center (SC2) connected to the mobile communication network; and
a data network (DN) connected to the second short message service center;
in which the short message service center defined in the telecommunication terminal (MS) is the first short message service center (SC1);
**characterized in that** the system comprises:
a converter component (MSCM) connected to the mobile communication network and referred to by the destination number (D) comprised in the number range of the mobile communication network, said converter component (MSCM) seen as a mobile switching center comprised in the number range of the mobile communication network; and that the said converter component comprises:
means for converting the Mobile Terminated format short message into a Mobile Originated format short message;
means for converting the predetermined destination number (D) of the short message referring to the converter component into a destination number (D') referring to the second short message service center (SC2); and
means for sending the short message to the second short message service center (SC2)

12. System as defined in claim 11, **characterized in that** the converter component (MSCM) is located at the network address corresponding to a mobile switching center.

13. System as defined in claim 11 or 12, **characterized in that** the destination number (D') referring to the second short message service center (SC2) is arranged to refer to a destination number (D") in the data network (DN).

14. System as defined in any one of claims 11 - 13, **characterized in that** the system comprises means for routing an acknowledgement message from the second short message service center (SC2) to the first short message service center (SC1) via the converter component (MSCM), so that the first short message service center (SC1) receives an acknowledgement message in response to the Mobile Terminated format short message.

## Patentansprüche

1. Verfahren zum Leiten einer Kurzmitteilung in ein Datennetzwerk innerhalb eines Telekommunikationssystems, umfassend:
ein mobiles Kommunikationsnetzwerk;
ein Telekommunikationsterminal (MS), das an das mobile Kommunikationsnetzwerk angeschlossen ist;
ein erstes, im folgenden als SMS-Zentrum bezeichnetes Kurzmitteilungs-Dienstzentrum (SC1), das an das mobile Kommunikationsnetzwerk angeschlossen ist; und
ein Datennetzwerk (DN), das an das mobile Kommunikationsnetzwerk angeschlossen ist;
wobei das in dem Telekommunikationsterminal (MS) definierte SMS-Zentrum das erste SMS-Zentrum (SC1) ist und das Verfahren beinhaltet:
eine an eine vorbestimmte Zielnummer adressierte Kurzmitteilung wird von dem Telekommunikationsterminal (MS) zu dem ersten SMS-Zentrum geleitet; und
die Kurzmitteilung wird im Ankunftsformat von dem ersten SMS-Zentrum zu der vorbestimmten Zielnummer geleitet,
**dadurch gekennzeichnet, dass** das Verfahren folgende Schritte aufweist:
Leiten der Kurzmitteilung von dem ersten SMS-Zentrum (SC1) zu einer Wandlerkomponente (MSCM) auf der Grundlage der Zielnummer (D), die auf sie Bezug nimmt und in dem Nummernbereich des mobilen Kommunikationsnetzwerks enthalten ist, wobei die Wandlerkomponente (MSCM) als mobile Wählvermittlung innerhalb des Nummernbereichs des mobilen Kommunikationsnetzwerks gesehen wird;
Umwandeln der vorbestimmten Zielnummer (D) der Kurzmitteilung, die auf die Wandlerkomponente (MSCM) Bezug nimmt, in eine auf auf das Datennetzwerk (DN) bezogene Zielnummer (D") innerhalb der Wandlerkomponente (MSCM) und
Leiten der Kurzmitteilung von der Wandlerkomponente in das Datennetzwerk (DN).

2. Verfahren nach Anspruch 1, **dadurch gekennzeichnet, dass** die Wandlerkomponente (MSCM) sich an einer Netzwerkadresse (D) befindet, die einer mobilen Wählvermittlung entspricht.

3. Verfahren nach Anspruch 1 oder 2, **dadurch gekennzeichnet, dass** das Datennetzwerk (D) an die Wandlerkomponente (MSC) angeschlossen ist.

4. Verfahren zum Leiten einer Kurzmitteilung in einem Telekommunikationssystem, umfassend:
ein mobiles Kommunikationsnetzwerk;
ein Telekommunikationsterminal (MS), welches an das mobile Kommunikationsnetzwerk angeschlossen ist;
ein erstes, im folgenden als SMS-Zentrum bezeichnetes Kurzmitteilungs-Dienstzentrum (SC1), welches an das mobile Kommunikationsnetzwerk angeschlossen ist;
ein zweites SMS-Zentrum (SC2), das an das mobile Kommunikationsnetzwerk angeschlossen ist; und
ein Datennetzwerk (DM), das an das zweite SMS-Zentrum angeschlossen ist;
wobei das in dem Telekommunikationsterminal (MS) definierte SMS-Zentrum als das erste SMS-Zentrum (SC1) definiert ist, wobei das Verfahren beinhaltet:
die an eine vorbestimmte Zielnummer adressierte Kurzmitteilung wird von dem Telekommunikationsterminal (MS) zu dem ersten SMS-Zentrum geleitet; und
die Kurzmitteilung wird von dem ersten SMS-Zentrum im Ankunftsformat zu der vorbestimmten Zielnummer geleitet,
**dadurch gekennzeichnet, dass** das Verfahren folgende Schritte beinhaltet:
Leiten der Kurzmitteilung von dem ersten SMS-Zentrum (SC1) zu einer Wandlerkomponente (MSCM) anhand einer auf diese Bezug nehmenden Zielnummer (D), die in dem Nummernbereich des mobilen Kommunikationsnetzwerks enthalten ist, wobei die Wandlerkomponente (MSCM) als mobile Wählvermittlung im Nummernbereich des mobilen Kommunikationsnetzwerk gesehen wird;
Umwandeln der vorbestimmten Zielnummer (D) der auf die Wandlerkomponente (MSC) Bezug nehmenden Kurzmitteilung in eine auf das zweite SMS-Zentrum Bezug nehmende Zielnummer (D') innerhalb der Wandlerkomponente (MSCM);
Umwandeln der Ankunftsformat-Kurzmitteilung innerhalb der Wandlerkomponente (MSCM) in eine Abgangsformat-Kurzmitteilung; und
Leiten der Kurzmitteilung von der Wandlerkomponente in das zweite SMS-Zentrum (SC2).

5. Verfahren nach Anspruch 4, **dadurch gekennzeichnet, dass** die Wandlerkomponente (MSCM) sich an der Netzwerkadresse befindet, die einer mobilen Wählvermittlung entspricht.

6. Verfahren nach Anspruch 4 oder 5, **dadurch gekennzeichnet, dass** die Zielnummer (D'), die Bezug auf das zweite SMS-Zentrum nimmt, derart ausgebildet ist, dass sie auf eine Zielnummer (D") innerhalb des Datennetzwerks (DN) Bezug nimmt, das an das zweite SMS-Zentrum angeschlossen ist.

7. Verfahren nach einem der Ansprüche 4 bis 6, **dadurch gekennzeichnet, dass** von dem zweiten SMS-Zentrum (SC2) über die Wandlerkomponente (MSC) an das erste SMS-Zentrum (SC1) eine Bestätigungsnachricht geleitet wird, so dass das erste SMS-Zentrum (SC1) ansprechend auf die Ankunftsformat-Kurzmitteilung eine Bestätigungsnachricht empfängt.

8. System zum Leiten einer Kurzmitteilung in ein Datennetzwerk innerhalb eines Telekommunikationssystems, umfassend:
ein mobiles Kommunikationsnetzwerk zum Leiten einer an eine vorbestimmte Zielnummer adressierten Kurzmitteilung aus einem Telekommunikationsterminal zu einem ersten, im folgenden als SMS-Zentrum bezeichneten Kurzmitteilungs-Dienstzentrum, und von dem ersten SMS-Zentrum im Ankunftsformat an die vorbestimmte Zielnummer;
ein Telekommunikationsterminal (MS), welches an das mobile Kommunikationsnetzwerk angeschlossen ist;
ein erstes SMS-Zentrum (SC1), das an das mobile Kommunikationsnetzwerk angeschlossen ist; und
ein Datennetzwerk (DN), welches an das mobile Kommunikationsnetzwerk angeschlossen ist;
wobei das in dem Telekommunikationsterminal (MS) definierte SMS-Zentrum das erste SMS-Zentrum (SC1) ist;
**dadurch gekennzeichnet, dass** das System aufweist:
eine Wandlerkomponente (MSCM), die an das mobile Kommunikationsnetzwerk angeschlossen ist, und auf die durch die im Nummernbereich des mobilen Kommunikationsnetzwerk enthaltene Zielnummer (D) Bezug genommen wird, wobei die Wandlerkomponente (MSCM) als mobile Wählvermittlung in dem Nummernbereich des mobilen Kommunikationsnetzwerk gesehen wird;
eine Einrichtung zum Leiten der Kurzmitteilung von dem ersten SMS-Zentrum (SC1) zu der Wandlerkomponente auf der Grundlage der vorbestimmten Zielnummer (D), die auf sie Bezug nimmt; und
eine Einrichtung zum Leiten der Kurzmitteilung von der Wandlerkomponente in das Datennetzwerk (DN);
und dass die Wandlerkomponente (MSCM) eine Einrichtung aufweist zum Umwandeln der vorbestimmten Kurzmitteilungs-Zielnummer (D), die auf die Wandlerkomponente Bezug nimmt, in eine auf das Datennetzwerk (DN) Bezug nehmende Zielnummer (DN).

9. System nach Anspruch 8, **dadurch gekennzeichnet, dass** die Wandlerkomponente (MSCM) sich unter der Netzwerkadresse befindet, die einer mobilen Wählvermittlung entspricht.

10. System nach Anspruch 8 oder 9, **dadurch gekennzeichnet, dass** das Datennetzwerk (DN) an die Wandlerkomponente (MSCM) angeschlossen ist.

11. System zum Leiten einer Kurznachricht in einem Telekommunikationssystem, umfassend:
ein mobiles Kommunikationsnetzwerk zum Leiten einer an eine vorbestimmte Zielnummer adressierten Kurzmitteilung aus einem Telekommunikationsterminal zu einem ersten, im folgenden als SMS-Zentrum bezeichneten Kurzmitteilungs-Dienstzentrum, und von dem ersten SMS-Zentrum im Ankunftsformat an die vorbestimmte Zielnummer;
ein Telekommunikationsterminal (MS), welches an das mobile Kommunikationsnetzwerk angeschlossen ist;
ein erstes, im folgenden als SMS-Zentrum bezeichnetes Kurzmitteilungs-Dienstzentrum (SC1), das an das mobile Kommunikationsnetzwerk angeschlossen ist;
ein zweites SMS-Zentrum (SC2), das an das mobile Kommunikationsnetzwerk angeschlossen ist; und
ein an das zweite SMS-Zentrum angeschlossenes Datennetzwerk (DN);
wobei das in dem Telekommunikationsterminal (MS) definierte SMS-Zentrum das erste SMS-Zentrum (SC1) ist;
**dadurch gekennzeichnet, dass** das System aufweist:
eine Wandlerkomponente (MSC), die an das mobile Kommunikationsnetzwerk angeschlossen ist, und auf die durch die Zielnummer (D) in dem Zielbereich des mobilen Kommunikationsnetzwerks Bezug genommen wird, wobei die Wandlerkomponente (MSCM) als ein in dem Nummernbereich des mobilen Kommunikationsnetzwerks enthaltene mobile Wählvermittlung gesehen wird, und dass die Wandlerkomponente beinhaltet:
eine Einrichtung zum Umwandeln der Ankunftsformat-Kurzmitteilung in einer Abgangsformat-Kurzmitteilung;
eine Einrichtung zum Umwandeln der vorbestimmten Zielnummer (D) der Kurzmitteilung, die auf die Wandlerkomponente Bezug nimmt, in eine Zielnummer (D'), die auf das zweite SMS-Zentrum (SC2) Bezug nimmt; und
eine Einrichtung zum Senden der Kurzmitteilung an das zweite SMS-Zentrum (SC2).

12. System nach Anspruch 11, **dadurch gekennzeichnet, dass** die Wandlerkomponente (MSCM) sich an der der mobilen Wählvermittlung entsprechenden Netzwerkadresse befindet.

13. System nach Anspruch 11 oder 12, **dadurch gekennzeichnet, dass** die Zielnummer (D'), die auf das zweite SMS-Zentrum (SC2) Bezug nimmt, so ausgebildet ist, dass sie auf eine Zielnummer (D") in dem Datennetzwerk (DN) Bezug nimmt.

14. System nach einem der Ansprüche 11 bis 13, **dadurch gekennzeichnet, dass** das System eine Einrichtung zum Leiten einer Bestätigungsnachricht von dem zweiten SMS-Zentrum (SC2) über die Wandlerkomponente (MSCM) zu dem ersten SMS-Zentrum (SC1) aufweist, so dass das erste SMS-Zentrum (SC1) ansprechend auf die Ankunftsformat-Kurzmitteilung eine Bestätigungsnachricht empfängt.

## Revendications

1. Procédé pour acheminer un message court dans un réseau de données dans un système de télécommunication comprenant :
un réseau de communication mobile ;
un terminal de télécommunication (MS) connecté au réseau de communication mobile ;
un premier centre de service de messages courts (SC1) connecté au réseau de communication mobile ; et
un réseau de données (DN) connecté au réseau de communication mobile ;
dans lequel le centre de service de messages courts défini dans le terminal de télécommunication (MS) est le premier centre de service de messages courts (SC1), et dans lequel procédé :
un message court adressé à un numéro de destination prédéterminé est acheminé du terminal de télécommunication (MS) vers le premier centre de service de messages courts ; et
le message court est acheminé dans un format Aboutissant à un Mobile du premier centre de service de messages courts vers le numéro de destination prédéterminé,
**caractérisé en ce que** le procédé comprend les étapes consistant à :
acheminer le message court du premier centre de service de messages courts (SC1) vers un composant de conversion (MSCM) sur la base du numéro de destination (D) faisant référence à celui-ci et compris dans la plage de numéros du réseau de communication mobile, ledit composant de conversion (MSCM) étant vu comme un centre de commutation du service mobile compris dans la plage de numéros du réseau de communication mobile ;
convertir, dans le composant de conversion (MSCM), le numéro de destination (D) prédéterminé du message court faisant référence au composant de conversion (MSCM) en un numéro de destination (D") faisant référence au réseau de données (DN) ; et
acheminer le message court du composant de conversion dans le réseau de données (DN).

2. Procédé selon la revendication 1, **caractérisé en ce que** le composant de conversion (MSCM) est disposé à une adresse de réseau (D) correspondant à un centre de commutation du service mobile.

3. Procédé selon la revendication 1 ou 2, **caractérisé en ce que** le réseau de données (DN) est connecté au composant de conversion (MSCM).

4. Procédé pour acheminer un message court dans un système de télécommunication comprenant :
un réseau de communication mobile ;
un terminal de télécommunication (MS) connecté au réseau de communication mobile ;
un premier centre de service de messages courts (SC1) connecté au réseau de communication mobile ;
un deuxième centre de service de messages courts (SC2) connecté au réseau de communication mobile ; et
un réseau de données (DN) connecté au deuxième centre de service de messages courts ;
dans lequel le centre de service de messages courts défini dans le terminal de télécommunication (MS) est le premier centre de service de messages courts (SC1), et dans lequel procédé :
le message court, qui est adressé à un numéro de destination prédéterminé, est acheminé du terminal de télécommunication (MS) vers le premier centre de service de messages courts ; et
le message court est acheminé du premier centre de service de messages courts vers le numéro de destination prédéterminé dans un format Aboutissant à un Mobile,
**caractérisé en ce que** le procédé comprend les étapes consistant à :
acheminer le message court du premier centre de service de messages courts (SC1) vers un composant de conversion (MSCM) sur la base d'un numéro de destination (D) faisant référence à celui-ci et compris dans la plage de numéros du réseau de communication mobile, ledit composant de conversion (MSCM) étant vu comme un centre de commutation du service mobile compris dans la plage de numéros du réseau de communication mobile ;
convertir, dans le composant de conversion (MSCM), le numéro de destination (D) prédéterminé du message court faisant référence au composant de conversion (MSCM) en un numéro de destination (D') faisant référence au deuxième centre de service de messages courts ;
convertir, dans le composant de conversion (MSCM), le message court au format Aboutissant à un Mobile en un message court au format Provenant d'un Mobile ; et
acheminer le message court du composant de conversion vers le deuxième centre de service de messages courts (SC2).

5. Procédé selon la revendication 4, **caractérisé en ce que** le composant de conversion (MSCM) est disposé à l'adresse de réseau correspondant à un centre de commutation du service mobile.

6. Procédé selon la revendication 4 ou 5, **caractérisé en ce que** le numéro de destination (D') faisant référence au deuxième centre de service de messages courts est agencé pour faire référence à un numéro de destination (D") dans le réseau de données (DN) connecté au deuxième centre de service de messages courts.

7. Procédé selon l'une quelconque des revendications 4 à 6, **caractérisé en ce qu'**un message d'acquittement est acheminé du deuxième centre de service de messages courts (SC2) vers le premier centre de service de messages courts (SC1) par l'intermédiaire du composant de conversion (MSCM), de sorte que le premier centre de service de messages courts (SC1) reçoive un message d'acquittement en réponse au message court au format Aboutissant à un Mobile.

8. Système pour acheminer un message court dans un réseau de données dans un système de télécommunication comprenant :
un réseau de communication mobile pour acheminer un message court adressé à un numéro de destination prédéterminé, d'un terminal de télécommunication vers un premier centre de service de messages courts, et du premier centre de service de messages courts vers le numéro de destination prédéterminé dans un format Aboutissant à un Mobile ;
un terminal de télécommunication (MS) connecté au réseau de communication mobile ;
un premier centre de service de messages courts (SC1) connecté au réseau de communication mobile ; et
un réseau de données (DN) connecté au réseau de communication mobile ;
dans lequel le centre de service de messages courts défini dans le terminal de télécommunication (MS) est le premier centre de service de messages courts (SC1)
**caractérisé en ce que** le système comprend :
un composant de conversion (MSCM) connecté au réseau de communication mobile et auquel il est fait référence par le numéro de destination (D) compris dans la plage de numéros du réseau de communication mobile, ledit composant de conversion (MSCM) étant vu comme un centre de commutation du service mobile compris dans la plage de numéros du réseau de communication mobile ;
des moyens pour acheminer le message court du premier centre de service de messages courts (SC1) vers le composant de conversion sur la base du numéro de destination (D) prédéterminé faisant référence à celui-ci ; et
des moyens pour acheminer le message court du composant de conversion dans le réseau de données (DN) ;
et **en ce que** le composant de conversion (MSCM) comprend des moyens pour convertir le numéro de destination de message court (D) prédéterminé faisant référence au composant de conversion en un numéro de destination (D") faisant référence au réseau de données (DN).

9. Système selon la revendication 8, **caractérisé en ce que** le composant de conversion (MSCM) est situé à l'adresse de réseau correspondant à un centre de commutation du service mobile.

10. Système selon la revendication 8 ou 9, **caractérisé en ce que** le réseau de données (DN) est connecté au composant de conversion (MSCM).

11. Système pour acheminer un message court dans un système de télécommunication comprenant :
un réseau de communication mobile pour acheminer un message court adressé à un numéro de destination prédéterminé, d'un terminal de télécommunication vers un premier centre de service de messages courts, et du premier centre de service de messages courts vers le numéro de destination prédéterminé dans un format Aboutissant à un Mobile ;
un terminal de télécommunication (MS) connecté au réseau de communication mobile ;
un premier centre de service de messages courts (SC1) connecté au réseau de communication mobile ;
un deuxième centre de service de messages courts (SC2) connecté au réseau de communication mobile ; et
un réseau de données (DN) connecté au deuxième centre de service de messages courts ;
dans lequel le centre de service de messages courts défini dans le terminal de télécommunication (MS) est le premier centre de service de messages courts (SC1) ;
**caractérisé en ce que** le système comprend :
un composant de conversion (MSCM) connecté au réseau de communication mobile et auquel il est fait référence par le numéro de destination (D) compris dans la plage de numéros du réseau de communication mobile, ledit composant de conversion (MSCM) étant vu comme un centre de commutation du service mobile compris dans la plage de numéros du réseau de communication mobile ; et **en ce que** ledit composant de conversion comprend :
des moyens pour convertir le message court au format Aboutissant à un Mobile en un message court au format Provenant d'un Mobile ;
des moyens pour convertir le numéro de destination (D) prédéterminé du message court faisant référence au composant de conversion en un numéro de destination (D') faisant référence au deuxième centre de service de messages courts (SC2) ; et
des moyens pour envoyer le message court au deuxième centre de service de messages courts (SC2).

12. Système selon la revendication 11, **caractérisé en ce que** le composant de conversion (MSCM) est situé à l'adresse de réseau correspondant à un centre de commutation du service mobile.

13. Système selon la revendication 11 ou 12, **caractérisé en ce que** le numéro de destination (D') faisant référence au deuxième centre de service de messages courts (SC2) est agencé pour faire référence à un numéro de destination (D") dans le réseau de données (DN).

14. Système selon l'une quelconque des revendications 11 à 13, **caractérisé en ce que** le système comprend des moyens pour acheminer un message d'acquittement du deuxième centre de service de messages courts (SC2) vers le premier centre de service de messages courts (SC1) par l'intermédiaire du composant de conversion (MSCM), de sorte que le premier centre de service de messages courts (SC1) reçoive un message d'acquittement en réponse au message court au format Aboutissant à un Mobile.
